# EUROPÄISCHE PATENTSCHRIFT

(11) **EP 1 070 373 B1**
(45) Veröffentlichungstag und Bekanntmachung des Hinweises auf die Patenterteilung: **19.09.2001**
(21) Anmeldenummer: 99924749.7
(22) Anmeldetag: 26.03.1999
(51) Int. Cl.: H02B 1/20

(54) **MEHRFELDRIGE SCHALTANLAGE MIT EINER SAMMELSCHIENENANORDNUNG**
MULTI-PANEL SWITCHING STATION WITH A BUSBAR UNIT
INSTALLATION DE COMMUTATION A PLUSIEURS ZONES COMPORTANT UN ENSEMBLE BARRE OMNIBUS

(30) Priorität: 08.04.1998 DE 19816589
(43) Veröffentlichungstag der Anmeldung: 24.01.2001
(73) Patentinhaber: SIEMENS AKTIENGESELLSCHAFT, 80333 München (DE)
(72) Erfinder: GOHLICKE, Kay, D-04157 Leipzig (DE); ZICKMANTEL, Matthias, D-04329 Leipzig (DE); CIHLAR, Michaela, D-04425 Taucha (DE)
(86) Internationale Anmeldenummer: DE9900997
(87) Internationale Veröffentlichungsnummer: WO9953582

(56) Entgegenhaltungen:
- PATENT ABSTRACTS OF JAPAN vol. 018, no. 652 (E-1642), 12. Dezember 1994 (1994-12-12) & JP 06 253419 A (TOSHIBA CORP), 9. September 1994 (1994-09-09)

## Beschreibung

Die Erfindung betrifft eine mehrfeldrige Schaltanlage für Niederspannung mit folgenden Merkmalen:
- je Feld der Schaltanlage ist ein Gerüstkörper zur Begrenzung eines Funktionsraumes vorhanden;
- über alle Felder der Schaltanlage erstreckt sich eine Sammelschienenanordnung;
- die Sammelschienenanordnung befindet sich an der einer Bedienungsfront der Schaltanlage gegenüberliegenden Rückseite des Gerüstkörpers in einem Sammelschienenraum;
- der Sammelschienenraum ist durch mit dem Gerüstkörper verbundene Träger und wenigstens ein rückseitiges Verschlußorgan begrenzt;
- eine Stützanordnung für die Sammelschienenanordnung ist durch Befestigungselemente mit dem Gerüstkörper verbunden.

Zum Verständnis der vorstehend benutzten Begriffe sei erwähnt, daß als Sammelschienenanordnung im vorliegenden Zusammenhang schienenförmige Stromleiter in solcher Anzahl und Anordnung bezeichnet werden, wie sie zum Energietransport in ein- oder mehrphasigen Netzen benötigt werden. Je Phase können dabei je nach der Höhe der auftretenden Ströme einzelne oder mehrere Stromleiter vorhanden sein. Ferner wird als Stützanordnung eine Kombination von Bauteilen verstanden, die jeden der Stromleiter mechanisch erfaßt und gegen Kräfte abstützt, die durch das Eigengewicht der Stromleiter und die in den Stromleitern fließenden Ströme hervorgerufen werden. Als Gerüstkörper werden räumliche Tragwerke mit beliebigem Aufbau bezeichnet, d. h. beispielsweise rahmenartige Gestelle oder solche in Vollwandbauweise, die aus leitenden oder nichtleitenden Werkstoffen bestehen und die zur Aufnahme von starkstromtechnischen Schalt- und Steuergeräten mit beliebiger Wirkungsweise sowie elektronischen bzw. datentechnischen Ausrüstungen bestimmt sind. Der Funktionsraum ist der von dem Gerüstkörper umschlossene, zur Aufnahme der genannten Geräte und Ausrüstungen vorgesehene Raum. Dieser Raum kann durch Montageschienen, Fachböden und/oder Einschubrahmen unterteilt sein, um eine zweckmäßige festmontierte oder lösbare Anordnung der Geräte zu ermöglichen. Als rückseitiges Verschlußorgan werden im vorliegenden Zusammenhang sowohl spezielle Wandkörper, wie z.B. ebene oder an den Rändern abgekantete Bleche als auch weitere Gerüstkörper verstanden, die zur Bildung einer Schaltanlage mit zwei Bedienungsfronten vorgesehen sind.

Eine Schaltanlage der eingangs genannten Art ist beispielsweise durch die DE 40 05 069 A1 bekanntgeworden. Bei dem einem der dort beschriebenen Ausführungsbeispiele wird der Sammelschienenraum durch eine rückseitige Profileinziehung von Seitenteilen der Gerüstkörper der benachbarten Felder gebildet. Die zuvor erwähnten Träger sind somit Bestandteil des Gerüstkörpers. Durch ein übliches, in dem genannten Dokument nicht gesondert dargestelltes Verschlußorgan wird der Sammelschienenraum nach hinten verschlossen.

Bei einer anderen Schaltanlage nach der Firmendruckschrift SIEMENS: "Niederspannungs-Schaltanlagen 8PG", Best.-Nr. E22V/1877, Druckschriften-Nr. 122 079 Ps 9735., wird ein rückseitig an den Gerüstkörper des Funktionsraumes anschließender gerüsthoher Sammelschienenraum durch ein gesondertes Sammelschienengerüst gebildet, das entsprechend seinem Verwendungszweck eine geringere Bautiefe als der Gerüstkörper des Funktionsraumes aufweist und sich zur wahlweisen Aufnahme von einer oder zwei Sammelschienenanordnungen eignet. Ferner eignet sich das Sammelschienengerüst zur Verbindung mit einem weiteren Gerüstkörper, wenn eine Schaltanlage mit zwei gegenüberliegenden Bedienungsfronten und zwei Funktionsräumen in freistehender Anordnung erstellt werden soll (vgl. die Abbildung auf Seite 6 unten der genannten SIEMENS-Druckschrift).

Unter den Sammelschienen werden im vorliegenden Zusammenhang jeweils die Hauptsammelschienen verstanden, die sich über die gesamte mehrfeldrige Schaltanlage erstrecken. Hiervon zu unterscheiden sind Feld- oder Verteilungsschienen, welche an die Hauptsammelschiene angeschlossen sind und die für die Energieverteilung innerhalb jedes einzelnen Feldes vorgesehen sind. Eine solche Anordnung ist z.B. in der DE 195 11 349 C1 beschrieben. Hier bilden die Feld- oder Verteilungsschienen zusammen mit einem Gehäuse einen vertikalen Sammelschienenkanal, der berührungssicher ausgebildet ist und Einstecköffnungen für steckbare Kontaktstücke von Schaltgeräten oder Geräteeinschüben besitzt.

Die Schaltanlage nach der genannten DE 195 11 349 C1 gehört zu der Bauart mit obenliegender Sammelschiene, wobei der Sammelschienenraum durch eine Zwischenwand vom Gesamtraum eines Gerüstes der Schaltanlage abgetrennt ist. Diese Bauart unterscheidet sich daher nach Lage und Gestaltung der Sammelschienenanordnung von den eingangs erwähnten Schaltanlagen mit rückseitiger Sammelschienenanordnung nach der DE 40 05 069 Al oder nach der Firmendruckschrift "Niederspannungs-Schaltanlagen 8PG".

Um die Betriebssicherheit einer Niederspannungs-Schaltanlage zu gewährleisten, werden alle Abstände zwischen benachbarten spannungführenden Teilen und zwischen diesen und geerdeten Bauteilen nach verbindlichen Vorschriften bemessen. Dennoch treten im Rahmen statistischer Gesetzmäßigkeiten Fehler auf, durch die eine elektrisch leitende Verbindung der genannten Teile mit nachfolgendem Störlichtbogen hervorgerufen wird. Die Ursachen solcher Vorgänge sind vielfältig: nur um Beispiele zu nennen sei erwähnt, daß in eine Schaltanlage elektrisch leitende Fremdkörper gelangen können, die solange keinen Schaden anrichten, wie sie in Ruhe verbleiben und die dann z.B. durch eine Erschütterung herabfallen und in die Sammelschienenanordnung geraten. Ferner können sich Bauteile durch Überlastung erhitzen und ihr Isoliervermögen ganz oder teilweise einbüßen. Da es sich erwiesen hat, daß das Auftreten von Störlichtbögen in Niederspannungs-Schaltanlagen auch bei großer Sorgfalt während der Fertigung und im späteren Betrieb nicht völlig ausgeschlossen werden kann, gehen die Bemühungen dahin, die Auswirkungen von Störlichtbögen möglichst zu beschränken. Hierzu können Maßnahmen getroffen werden, welche die passive oder die aktive Sicherheit verbessern, wie Lichtbogenbarrieren nach der EP 0 714 564 oder ein Schutzsystem nach der WO 95/22167. In jedem Fall erweist es sich aber als erforderlich, eine Schaltanlage nach dem Auftreten einer Störung sorgfältig zu untersuchen und durch Reinigung, Austausch beschädigter Teile und weitere zweckentsprechende Maßnahmen wieder in einen betriebssicheren Zustand zu versetzen.

Obwohl die vorstehend angedeuteten Arbeiten grundsätzlich bei derzeit üblichen Bauweisen einer Schaltanlage durchführbar sind, ist der Zeitbedarf hierfür stets beträchtlich. Dies hängt damit zusammen, daß die an der Rückseite des Funktionsraumes befindliche Sammelschienenanordnung nur schwer zugänglich ist. Selbst die Entnahme sämtlicher Geräte aus einem beschädigten Feld einer Schaltanlage genügt häufig nicht, einen für die Reparatur der Sammelschienenanordnung ausreichenden Zugang zu schaffen. Daher kann es sich als erforderlich erwiesen, eine Schaltanlage völlig zu demontieren, um die Sammelschienenanordnung freizulegen und eine Reparatur oder den Ersatz zu ermöglichen. Es bedarf keiner näheren Erläuterung, daß eine solche Demontage einen außerordentlichen Aufwand darstellt.

Der Erfindung liegt hiervon ausgehend die Aufgabe zugrunde, eine Niederspannungs-Schaltanlage der eingangs genannten Art so auszubilden, daß der Zugang zu der Sammelschienenanordnung wesentlich erleichtert und somit der für eine Wartung oder Reparatur erforderliche Aufwand an Arbeitszeit entsprechend vermindert wird.

Gemäß der Erfindung wird diese Aufgabe durch folgende Merkmale gelöst:
- die Befestigungselemente der Stützanordnung für die Sammelschienenanordnung erstrecken sich ausgehend vom Funktionsraum in den Sammelschienenraum und besitzen im Funktionsraum gelegene Bedienelemente;
- die zu dem Sammelschienenraum gehörenden Träger sind als gesonderte, mit dem Gerüstkörper des Funktionsraumes durch Befestigungsmittel verbundene Teile ausgebildet;
- die Befestigungsmittel für die Träger erstrecken sich gleichfalls aus dem Funktionsraum in den Sammelschienenraum und besitzen im Funktionsraum zugängliche Bedienmittel.

Wie schon erwähnt, wurde bei den bisher üblichen Bauarten der Niederspannungs-Schaltanlagen entweder ein gesonderter Gerüstteil zur Aufnahme der Sammelschienenanordnung oder eine spezielle Ausgestaltung des den Funktionsraum aufnehmenden Gerüstkörpers vorgesehen, um die Sammelschienenanordnung möglichst einfach an der Rückseite des Gerüstkörpers montieren zu können. Demgegenüber sieht die Erfindung vor, daß die Befestigungselemente für die Stützanordnung der Sammelschienenanordnung in dem Funktionsraum zugänglich sind. Somit kann in jedem Feld die Verbindung zwischen dem Gerüstkörper und der Sammelschienenanordnung gelöst werden. Ebenso kann die Verbindung zwischen dem Gerüstkörper und den Trägern gelöst werden, die zur Anbringung von Abdeckungen des Sammelschienenraumes dienen. Ist beides geschehen, so kann der Gerüstkörper des betreffenden Feldes aus dem Verbund mit dem benachbarten Feld bzw. den benachbarten Feldern gelöst und herausgezogen werden. Damit liegt die Sammelschienenanordnung zur Vornahme beliebiger Arbeiten frei.

Eine Schaltanlage nach der Erfindung kann durch eine Reihe weiterer vorteilhafter Maßnahmen ausgestaltet werden.

Im Rahmen der Erfindung empfiehlt es sich, die erwähnten Träger winkelförmig auszubilden, derart, daß parallele Schenkel zur Anlage am Gerüstkörper und am Verschlußorgan gebildet sind.

Eine weitere Verbesserung ergibt sich, wenn je Feld der Schaltanlage ein oberer Träger und ein unterer Träger vorgesehen sind und diese Träger rückseitig sowie oben bzw. unten Auflageflächen zur Anlage eines Verschlußorgans bzw. einer Abdeckung besitzen. Die winkelförmigen Träger können dann nämlich wenigstens zusammen mit einem rückseitigen Verschlußorgan eine zusammenhängende Baugruppe bilden, deren Zusammenhalt auch nach Lösung der Befestigungsmittel für die Träger erhalten bleibt. Eine solche Baugruppe entsteht gleichfalls, wenn das rückseitige Verschlußorgan durch den Gerüstkörper eines weiteren Feldes der Schaltanlage gebildet ist, wie dies bei Schaltanlagen mit zwei Bedienfronten der Fall ist. Somit verbleiben die Träger stets in der richtigen Position für die erneute Verbindung mit dem zugehörigen Gerüstkörper, wenn die Arbeiten an der Sammelschienenanordnung abgeschlossen sind.

Zur Vereinfachung der Schaltanlage kann dadurch beigetragen werden, daß die oberen und unteren winkelförmigen Träger gleich ausgebildet und um 180° gedreht montierbar sind.

Ferner ist es zur Vermeidung einer besonderen Unterstützung des Sammelschienenraumes oder von Ausgleichsstücken zweckmäßig, die oberen und die unteren winkelförmigen Träger bündig mit dem Gerüstkörper des Funktionsraumes anzuordnen. Die richtige Stellung des Gerüstkörpers zu dem Sammelschienenraum bzw. den winkelförmigen Trägern bei der erneuten Verbindung wird hierdurch am einfachsten sichergestellt.

Als weiteres vorteilhaftes Merkmal ist nach einer Ausgestaltung der Erfindung vorgesehen, daß die winkelförmigen Träger mit Montageflächen für Zubehör, wie Schutzleiterschienen, versehen sind.

Im Zusammenhang mit der Bildung der erwähnten Baugruppe aus winkelförmigen Trägern und einem Verschlußorgan erweist es sich als zweckmäßig, wenn das Verschlußorgan als gerüsthohe Blechwand ausgebildet und durch randseitige Abwinklungen insbesondere gegen eine Verformung um eine horizontale Achse versteift ist. Hierdurch erlangt die erwähnte Baugruppe auch bei großer Höhe des Gerüstes der Schaltanlage eine solche Stabilität, daß nach der Trennung der winkelförmigen Träger von dem Gerüstkörper und bei der erneuten Verbindung die Befestigungselemente mit den zugehörigen Aufnahmeöffnungen problemlos fluchten.

Die Erfindung wird im folgenden anhand der in den Figuren dargestellten Ausführungsbeispiele näher erläutert.

Die Figur 1 zeigt eine Niederspannungs-Schaltanlage in einen Schnitt I-I in der Figur 2, wobei links einer Sammelschienenanordnung im oberen Teil eine Ausführungsform mit einer Rückwand und im unteren Teil eine Ausführungsform mit einen weiteren Funktionsraum dargestellt ist.

In der Figur 2 ist eine frontseitige Ansicht einer aus drei Feldern zusammengesetzten Schaltanlage gemäß der Figur 1 gezeigt, wobei ein Gerüstkörper des mittleren Feldes entfernt ist, um die Sammelschienenanordnung zugänglich zu machen.

Die Figur 3 zeigt in einer rückseitigen perspektivischen Darstellung eines Feldes der Schaltanlage nach den Figuren 1 und 2 einen Gerüstkörper, einen oberen und einen unteren winkelförmigen Träger sowie eine Sammelschienenanordnung.

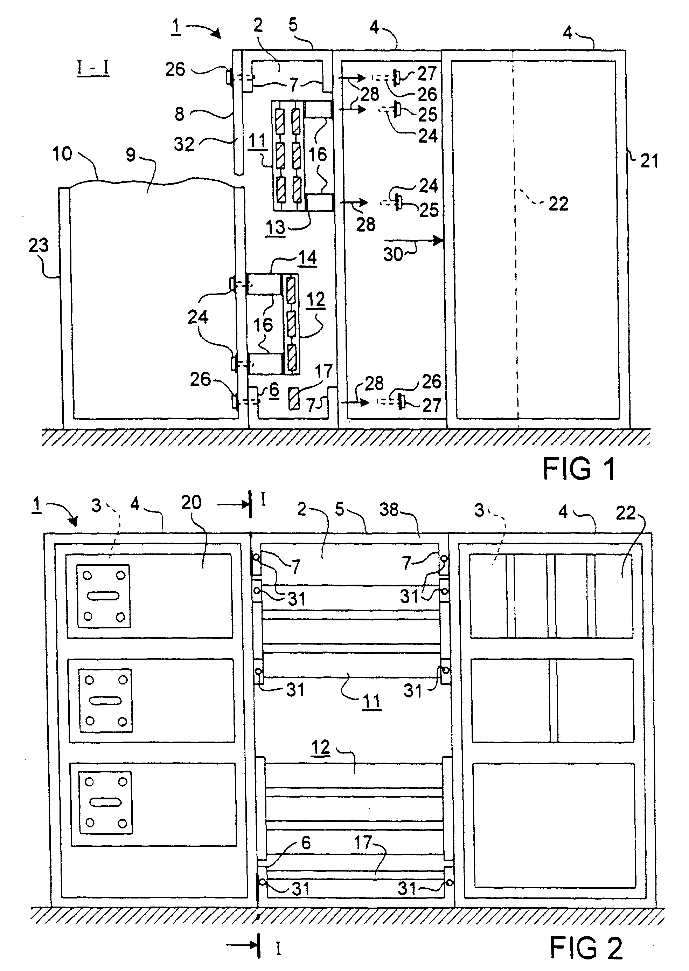

Die in den Figuren 1 und 2 gezeigte Niederspannungs-Schaltanlage 1 kann eine Bedienungsfront oder zwei Bedienungsfronten aufweisen. Beide Ausführungsformen weisen einen Sammelschienenraum 2 auf, an den sich in der Figur 1 nach rechts ein Funktionsraum 3 anschließt, der zur Aufnahme von Schalt- und Steuergeräten beliebiger Art vorgesehen ist. In bekannter Weise wird der Funktionsraum 3 durch einen Gerüstkörper 4 gebildet. Der Sammelschienenraum 2 wird nach oben durch einen oberen winkelförmigen Träger 5 und nach unten durch einen unteren winkelförmigen Träger 6 begrenzt. Die Träger 5 und 6 besitzen parallele Schenkel 7 zur Anlage am Gerüstkörper 4 bzw. an unterschiedlichen Verschlußorganen, wie noch erläutert wird. In der Ausführungsform mit einer Bedienungsfront ist der Sammelschienenraum 2 rückseitig durch ein als Rückwand ausgebildetes Verschlußorgan 8 begrenzt, wie dies in der Figur 1 im linken oberen Bereich dargestellt ist. Bei der Ausführungsform mit zwei Bedienungsfronten schließt sich an den Sammelschienenraum 2 in der Figur 1 nach links ein weiterer Funktionsraum 9 an, der durch einen weiteren Gerüstkörper gebildet ist. Dieser ist im linken unteren Bereich der Figur 1 als Verschlußorgan 10 bezeichnet.

In dem Sammelschienenraum 2 sind - bei der Ausführungsform der Schaltanlage 1 mit zwei Bedienungsfronten - zwei Sammelschienenanordnungen 11 und 12 untergebracht, von denen die Sammelschienenanordnung 11 im oberen Bereich gelegen und dem Funktionsraum 3 zugeordnet ist, während die weitere Sammelschienenanordnung 12 zur Versorgung der Geräte im Funktionsraum 9 dient und sich im unteren Bereich des Sammelschienenraumes 2 befindet. Wie dies an sich bekannt ist, werden die Sammelschienenanordnungen 11 und 12 durch Stützanordnungen 13 bzw. 14 getragen, die jeweils Isolierstützer 15 und Halter 16 umfassen. Ferner ist der Sammelschienenraum 2 mit einer Schutzleiterschiene oder mit mehreren Schutzleiterschienen 17 ausgerüstet, die in dem gezeigten Beispiel mittels Haltevorrichtungen 18 an dem unteren winkelförmigen Träger 6 befestigt sind.

Aus der Figur 2 ist näher die mehrfeldrige Ausführung der Niederspannungs-Schaltanlage 1 ersichtlich. Es sind drei nebeneinander aufgestellte Felder gezeigt, wobei im mittleren Feld der zugehörige Gerüstkörper entfernt ist und die dahinter befindlichen Sammelschienenanordnungen 11 und 12 sichtbar sind, die sich über die ganze Breite der Schaltanlage 1 erstrecken. Das linke und das rechte Feld sind im geschlossenen Zustand dargestellt, um als Beispiele Bedienungsfronten 20 bzw. 22 von vorn zu zeigen, die zu unterschiedlichen Ausrüstungen mit Geräten gehören. Die Bedienungsfront 21 des mittleren Feldes ist nur in der Figur 1 im Profil angedeutet. Bei der Ausführung der Schaltanlage 1 mit zusätzlichen Gerüstkörpern (Verschlußorgane 10) sind weitere Bedienungsfronten 23 vorhanden, wie dies in der Figur 1 angedeutet ist.

Für die Erfindung ist es wesentlich, daß die Sammelschienenanordnungen 11 bzw. 12 mit verhältnismäßig geringem Aufwand zugänglich sind, wenn dies zum Zweck der Wartung oder Reparatur erforderlich sein sollte. Dies wird dadurch erreicht, daß die Stützanordnungen 13 und 14 der Sammelschienenanordnungen 11 bzw. 12 durch Befestigungselemente gehalten werden, die im Funktionsraum jedes Feldes der Schaltanlage 1 zugänglich sind und von dort gelöst bzw. eingesetzt werden können. Zur Erläuterung sei näher die Sammelschienenanordnung 11 in den Figuren 1 und 2 betrachtet. Die erwähnten Halter 16 sind durch Befestigungselemente 24 mit dem Gerüstkörper 4 verbunden, die sich in den Funktionsraum 3 erstrecken und dort Bedienelemente 25 aufweisen. Als Befestigungselemente 24 eignen sich beispielsweise Schrauben oder spezielle Drehriegel, wobei die Bedienelemente 25 durch Schraubenköpfe bzw. Griffstücke gebildet werden. In sinngemäß der gleichen Weise sind die winkelförmigen Träger 5 und 6 mit dem Gerüstkörper 4 durch Befestigungsmittel 26 verbunden, die im Funktionsraum 3 zugängliche Bedienmittel 27 aufweisen.

In der Figur 1 ist durch Pfeile 28 angedeutet, daß die Befestigungselemente 24 und die Befestigungsmittel 26 gelöst sind und somit der Gerüstkörper 4 aus dem Verbund mit den weiteren Feldern der Schaltanlage 1 entfernt werden kann. Dies ist durch einen weiteren Pfeil 30 veranschaulicht. In der Figur 2 sind Eingrifföffnungen 31 gezeigt, die zur Aufnahme der Befestigungselemente 24 bzw. der Befestigungsmittel 26 in den Haltern 16 bzw. den Trägern 5 und 6 dienen.

Da sich die Sammelschienenanordnung 11 über die ganze Breite der Schaltanlage 1 erstreckt, ist auch nach der Entfernung der Befestigungselemente 24 eine ausreichende Abstützung gewährleistet. Ebenso verbleiben die Träger 5 und 6 in der gezeigten Position, und zwar aufgrund der Abstützung des unteren Trägers 6 auf dem Boden und der Verbindung beider Träger 5 und 6 durch rückseitige Verschlußorgane 8 bzw. 10 (Rückwand oder weiterer Gerüstkörper), jeweils entsprechend durch Befestigungsmittel 26. Das als Rückwand ausgebildete Verschlußorgan 8 ist hierzu gerüsthoch ausgebildet und durch randseitige Abkantungen 32 so versteift, daß eine störende Verformung der Anordnung nach dem Entfernen des Gerüstkörpers 4 unterbleibt und bei dessen erneuter Montage die Befestigungselemente 24 und die Befestigungsmittel 26 mit den Eingrifföffnungen 31 problemlos fluchten, wenn sie entgegen der Richtung der Pfeile 28 in der Figur 1 eingesetzt werden. Ist ein Verschlußorgan 10 (weiterer Gerüstkörper) vorhanden, so ist die Eigenschaft der Steifigkeit gegen unerwünschte Verformung ohne besondere Maßnahmen gegeben.

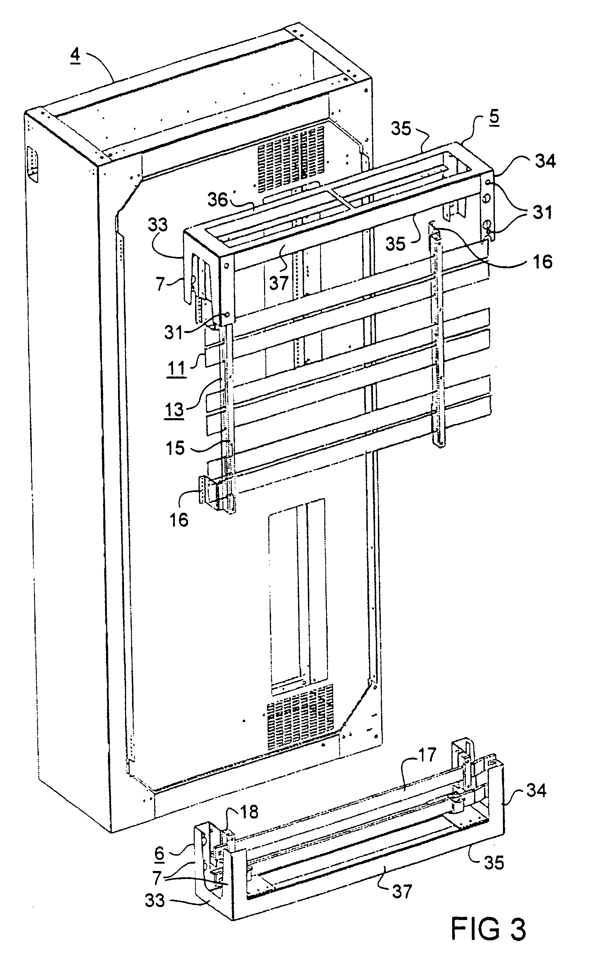

Die Beschaffenheit der winkelförmigen Träger 5 und 6 ist näher der Figur 3 zu entnehmen. Wie man erkennt, besteht jedes der Träger 5 bzw. 6 aus zwei U-förmigen Endstücken 33 bzw. 34 und diese verbindenden Querholmen 35, die gemeinsam Auflageflächen 36 und 37 bilden. Von diesen dienen die Auflageflächen 36 zur Anbringung von Verschlußblechen oder Lüftungsgittern für den Sammelschienenraum 2, während die Auflageflächen 37 zur Anlage am Gerüstkörper 4 bzw. an einem Verschlußorgan 8 oder 10 (Rückwand oder weiterer Gerüstkörper; Figur 1) dienen. Die Träger 5 und 6 sind symmetrisch aufgebaut und daher durch Drehung um 180° wahlweise als obere oder untere Träger benutzbar. Gleichfalls eignen sich die Träger 5 und 6 zur Anbringung der schon erwähnten Haltevorrichtungen 18 für Schutzleiterschienen 17 oder ähnliches Zubehör.

Vorstehend wurde die Demontage eines Gerüstkörpers 4 zur Freilegung der Sammelschienenanordnung 11 erläutert. Die gleiche Arbeitsweise ergibt sich sinngemäß, wenn die weitere Sammelschienenanordnung 12 freigelegt werden soll. In diesem Fall sind die Befestigungselemente 24 der Stützanordnungen 16 im Funktionsraum 9 zu lösen, ebenso die Befestigungsmittel 24 der Träger 5 und 6.

Für das Prinzip der Erfindung ist der Aufbau der Sammelschienenanordnungen 11 bzw. 12 nicht erheblich. Es kommt daher nicht darauf an, ob es sich um ein- oder mehrphasige Sammelschienenanordnungen oder solche mit einem Leiter oder mehreren Leitern je Phase handelt. Gleichfalls ist die Erfindung unabhängig davon anwendbar, wie viele Felder die Schaltanlage umfaßt und ob ein endseitiges Feld betroffen ist. Dem Fachmann ist rerner verständlich, daß die Darstellung nur je eines Befestigungselementes 24 für jeden Halter 16 der Stützanordnungen 13 und 14 und je eines Befestigungsmittels 26 für jeden Schenkel 7 der Träger 5 und 6 auf Gründen der Übersichtlichkeit beruht und nach Bedarf auch eine höhere Anzahl gewählt werden kann.

## Patentansprüche

1. Mehrfeldrige Schaltanlage (1) für Niederspannung mit folgenden Merkmalen:
- je Feld der Schaltanlage (1) ist ein Gerüstkörper (4; 10) zur Begrenzung eines Funktionsraumes (3;9) vorhanden;
- über alle Felder der Schaltanlage (1) erstreckt sich eine Sammelschienenanordnung (11, 12);
- die Sammelschienenanordnung (11, 12) befindet sich an der einer Bedienungsfront (20, 21, 22, 23) der Schaltanlage (1) gegenüberliegenden Rückseite des Gerüstkörpers (4; 10) in einem Sammelschienenraum (2);
- der Sammelschienenraum (2) ist durch mit dem Gerüstkörper (4; 10) verbundene Träger (5, 6) und wenigstens ein rückseitiges Verschlußorgan (8; 10) begrenzt;
- eine Stützanordnung (13, 14) für die Sammelschienenanordnung (11, 12) ist durch Befestigungselemente (24) mit dem Gerüstkörper (4; 10) verbunden;
**gekennzeichnet durch** folgende weitere Merkmale:
- die Befestigungselemente (24) der Stützanordnung (13, 14) für die Sammelschienenanordnung (11, 12) erstrecken sich ausgehend vom Funktionsraum (3; 8) in den Sammelschienenraum (2) und besitzen im Funktionsraum (3; 9) gelegene Bedienelemente (25);
- die zu dem Sammelschienenraum (2) gehörenden Träger (5, 6) sind als gesonderte, mit dem Gerüstkörper (4; 10) des Funktionsraumes (3; 9) durch Befestigungsmittel (26) verbundene Teile ausgebildet;
- die Befestigungsmittel (26) für die Träger (5, 6) erstrekken sich gleichfalls aus dem Funktionsraum (3; 9) in den Sammelschienenraum (2) und besitzen im Funktionsraum (3; 9) zugängliche Bedienmittel (27) .

2. Schaltanlage nach Anspruch 1 ,
**dadurch gekennzeichnet, daß**
die Träger (5, 6) winkelförmig ausgebildet sind und parallele Schenkel (7) zur Anlage am Gerüstkörper (4) und am Verschlußorgan (8; 10) aufweisen.

3. Schaltanlage nach Anspruch 2,
**dadurch gekennzeichnet**, daß
je Feld der Schaltanlage (1) ein oberer winkelförmiger Träger (5) und eine unterer winkelförmiger Träger (6) vorgesehen sind und daß die Träger (5, 6) rückseitig sowie oben bzw. unten Auflageflächen (36, 37) zur Anlage eines Verschlußorgans (8; 10) bzw. einer Abdeckung besitzen.

4. Schaltanlage nach Anspruch 2 oder 3,
**dadurch gekennzeichnet**, daß
daß die oberen und unteren Träger (5, 6) gleich ausgebildet und um 180° gedreht montierbar sind.

5. Schaltanlage nach einem der Ansprüche 2 bis 4,
**dadurch gekennzeichnet, daß**
die oberen und die unteren winkelförmigen Träger (5, 6) bündig mit dem Gerüstkörper (4; 10) des Funktionsraumes (3; 9) angeordnet sind.

6. Schaltanlage nach einem der Ansprüche 2 bis 5
**dadurch gekennzeichnet**, daß
die winkelförmigen Träger (5, 6) mit Haltevorrichtungen (18) für Zubehör, wie Schutzleiterschienen (17), versehen sind.

7. Schaltanlage nach einem der vorangehenden Ansprüche,
**dadurch gekennzeichnet**, daß
das rückseitige Verschlußorgan (8) als gerüsthohe Rückwand ausgebildet und durch randseitige Abwinklungen (32) insbesondere gegen eine Verformung um eine horizontale Achse versteift ist.

## Claims

1. Multi-bay switchgear (1) for low voltage, with the following features:
- a framework body (4; 10) for bounding a functional chamber (3; 9) is present for each bay of the switchgear (1) ;
- a bus-bar arrangement (11, 12) extends over all the bays of the switchgear (1);
- the bus-bar arrangement (11, 12) is located on the rear of the framework body (4; 10) situated opposite an operating panel (20, 21, 22, 23) of the switchgear (1) in a bus-bar chamber (2);
- the bus-bar chamber (2) is bounded by beams (5, 6) connected to the framework body (4; 10) and by at least one rear closure member (8; 10);
- a supporting arrangement (13, 14) for the bus-bar arrangement (11, 12) is connected to the framework body (4; 10) by fastening elements (24);
**characterised by** the following further features:
- the fastening elements (24) of the supporting arrangement (13, 14) for the bus-bar arrangement (11, 12) extend, starting from the functional chamber (3; 8), into the bus-bar chamber (2) and possess operating elements (25) situated in the functional chamber (3; 9);
- the beams (5, 6) pertaining to the bus-bar chamber (2) take the form of separate parts connected to the framework body (4; 10) of the functional chamber (3; 9) by fastening means (26);
- the fastening means (26) for the beams (5, 6) likewise extend out of the functional chamber (3; 9) into the bus-bar chamber (2) and possess operating means (27) that are accessible in the functional chamber (3; 9).

2. Switchgear according to Claim 1,
**characterised in that**
the beams (5, 6) are of angular design and comprise parallel legs (7) for abutment against the framework body (4) and against the closure member (8; 10).

3. Switchgear according to Claim 2,
**characterised in that**
an upper angular beam (5) and a lower angular beam (6) are provided for each bay of the switchgear (1) and in that the beams (5, 6) possess at the rear, as well as at the top and at the bottom, bearing surfaces (36, 37) for the abutment of a closure member (8; 10) or of a cover.

4. Switchgear according to Claim 2 or 3,
**characterised in that**
the upper and lower beams (5, 6) are of identical design and are capable of being mounted rotated by 180°.

5. Switchgear according to one of Claims 2 to 4,
**characterised in that**
the upper and the lower angular beams (5, 6) are arranged so as to be flush with the framework body (4; 10) of the functional chamber (3; 9).

6. Switchgear according to one of Claims 2 to 5,
**characterised in that**
the angular beams (5, 6) are provided with holding devices (18) for accessories such as protective-conductor bars (17).

7. Switchgear according to one of the preceding claims,
**characterised in that**
the rear closure member (8) takes the form of a framework-high rear wall and is stiffened by edge-side angled pieces (32) in particular against a deformation about a horizontal axis.

## Revendications

1. Installation (1) de commutation à plusieurs zones pour basse tension, ayant les caractéristiques suivantes :
- pour chaque zone de l'installation (1) de commutation, il est présent une ossature (4 ; 10) destinée à délimiter une chambre (3 ; 9) de fonction, ;
- un dispositif (11, 12) à barre omnibus s'étend sur toutes les zones de l'installation (1) de commutation ;
- le dispositif (11, 12) à barre omnibus se trouve dans une chambre (2) à barre omnibus sur la face arrière de l'ossature (4 ; 10) qui est opposée à la face (20, 21, 22, 23) de service de l'installation (1) de commutation ;
- la chambre (2) de barre omnibus est délimitée par des poutrelles (5, 6) reliées à l'ossature (4 ; 10) et par au moins un organe (8 ; 10) de fermeture du côté arrière ;
- un dispositif (13, 14) d'appui du dispositif (11, 12) à barre omnibus est relié à l'ossature (4 ; 10) par des éléments (24) de fixation ;
**caractérisée par** les autres caractéristiques suivantes :
- les éléments (24) de fixation du dispositif (13, 14) d'appui du dispositif (11, 12) à barre omnibus s'étendent à partir de la chambre (3 ; 8) de fonction dans la chambre (2) de barre omnibus et possèdent des éléments (25) de service mis dans la chambre (3 ; 9) de fonction ;
- les poutrelles (5, 6) appartenant à la chambre (2) de barre omnibus sont constituées sous la forme de parties distinctes reliées à l'ossature (4 ; 10) de la chambre (3 ; 9) de fonction par des moyens (26) de fixation ;
- les moyens (26) de fixation des poutrelles (5, 6) s'étendent également de la chambre (3 ; 9) de fonction dans la chambre (2) de barre omnibus et possèdent dans la chambre (3 ; 9) de fonction des moyens (27) de service qui sont accessibles.

2. Installation de commutation suivant la revendication 1, **caractérisée en ce que** les poutrelles (5, 6) sont constituées en équerres et comportent des branches (7) parallèles d'appui sur l'ossature (4) et sur l'organe (8 ; 10) de fermeture.

3. Installation de commutation suivant la revendication 2, **caractérisée en ce que** pour chaque zone de l'installation (1) de commutation, il est prévu une poutrelle (5) supérieure en forme d'équerre et une poutrelle (6) inférieure en forme d'équerre et en ce que les poutrelles (5, 6) possèdent du côté arrière ainsi qu'en haut et en bas des surfaces (36, 37) d'appui d'un organe (8 ; 10) de fermeture ou d'un couvercle.

4. Installation de commutation suivant la revendication 2 ou 3, **caractérisée en ce que** les poutrelles (5, 6) supérieure et inférieure sont constituées de la même façon et peuvent être montées en les tournant de 180°.

5. Installation de commutation suivant l'une des revendications 2 à 4, **caractérisée en ce que** les poutrelles (5, 6) supérieure et inférieure en forme d'équerres sont disposées à affleurement avec l'ossature (4 ; 10) de la chambre (3 ; 9) de fonction.

6. Installation de commutation suivant l'une des revendications 2 à 5, **caractérisée en ce que** les poutrelles (5, 6) en forme d'équerres sont munies de dispositifs (18) de maintien pour des accessoires comme des barres (17) conductrices de protection.

7. Installation de commutation suivant l'une des revendications précédentes, **caractérisée en ce que** l'organe (8) de fermeture du côté arrière est constitué sous la forme d'une paroi arrière au niveau de l'ossature et est rigidifié par des coudes (32) du côté du bord destinés à empêcher notamment une déformation autour d'un axe horizontal.
